# EUROPÄISCHE PATENTSCHRIFT

(11) **EP 3 100 882 B1**
(45) Veröffentlichungstag und Bekanntmachung des Hinweises auf die Patenterteilung: **10.04.2019**
(21) Anmeldenummer: 16153586.9
(22) Anmeldetag: 01.02.2016
(51) Int. Cl.: B60G 21/05, B60G 7/00

(54) **VERFAHREN ZUR HERSTELLUNG EINER ACHSANORDNUNG**
FABRICATION METHOD FOR AN AXLE ASSEMBLY
PROCÉDÉ DE FABRICATION D'UN ESSIEU

(30) Priorität: 02.02.2015 DE 102015101474
(43) Veröffentlichungstag der Anmeldung: 07.12.2016
(73) Patentinhaber: Benteler Automobiltechnik GmbH, 33102 Paderborn (DE)
(72) Erfinder: Niggemeyer, Norbert, 33102 Paderborn (DE); Henksmeier, Thomas, 59329 Wadersloh (DE); Stastny, Peter, 33129 Delbrück (DE); Bera, Waldemar, 33178 Borchen (DE); Janzen, Andreas, 34439 Willebadessen-Peckelsheim (DE)
(74) Vertreter: Osterhoff, Utz

(56) Entgegenhaltungen:
- DE-A1-102008 062 780
- DE-A1-102010 020 816
- DE-A1-102011 056 390
- FR-A1- 2 928 298
- FR-A1- 2 943 273
- JP-A- 2000 025 438
- JP-A- 2002 274 134
- JP-A- 2005 119 601

## Beschreibung

Die vorliegende Erfindung betrifft ein Verfahren zur Herstellung einer Achsanordnung gemäß den Merkmalen im Oberbegriff von Patentanspruch 1.

Im Stand der Technik sind verschiedene Achstypen für Kraftfahrzeuge bekannt. In einfachster Ausgestaltung sind dies Starrachsen, die unter Eingliederung eines Federelementes, beispielsweise einer Blattfeder, an einer Karosserie oder einem Chassis befestigt sind. Komplexere Achssysteme sind beispielsweise Mehrlenkerachsen mit Einzelradaufhängung.

Aus dem Stand der Technik sind auch Verbundlenkerachsen bekannt, die zumeist an einer Hinterachse zum Einsatz kommen. Eine Verbundlenkerachse weist ein sich über einen Teil der Kraftfahrzeugbreite erstreckendes Torsionsrohr auf, wobei an den Enden des Torsionsrohres in Längsrichtung orientiert Schwingen festgelegt sind. An dem freien Ende einer jeden Schwinge ist wiederum dann ein Kraftfahrzeugrad unter Eingliederung eines Radträgers gekoppelt.

Beispielsweise ist eine Radträgeranbindung an einer Starrachse aus der DE 10 2010 020 816 A1 bekannt.

Eine ähnliche Ausgestaltung ist aus der JP-A-2002 274 134 bekannt. FR-A-2943273 veröffentlicht zwei Verfahren um eine Verbundlenker-Achsanordnung mit unterschiedlichen Spurweiten herzustellen.

Aufgabe der vorliegenden Erfindung ist es, eine Kraftfahrzeugachse derart weiterzubilden, dass die verwendeten Bauteile reduziert werden, gleichzeitig jedoch eine Voreinstellungsmöglichkeit für Spur und/oder Sturz gegeben ist und die Kraftfahrzeugachse für verschiedene Kraftfahrzeugtypen einsetzbar ist.

Die zuvor genannte Aufgabe wird erfindungsgemäß mit einem Verfahren zur Herstellung einer Achsanordnung für ein Kraftfahrzeug durch die Merkmale im Patentanspruch 1 gelöst.

Vorteilhafte Ausgestaltungsvarianten der vorliegenden Erfindung sind Gegenstand der abhängigen Patentansprüche.

Die Aufgabe wird mit einem Verfahren zur Herstellung nachfolgend beschriebener Achsanordnung gelöst. Somit wird eine Verbundlenkerachse bereitgestellt sowie standartisierte Radträger. Die Radträger, können auch als Radträgerrohlinge bezeichnet werden. Es wird dann für das herzustellende Fahrzeug eine geforderte Spurweite festgelegt. Wenn beispielsweise ein Minivan oder aber auch ein Geländewagen produziert werden, ist die Spurweite größer gegenüber einem Kleinwagen oder einer Limousine. In Abhängigkeit der geforderten Spurweite werden dann an den Radträgerrohlingen insbesondere in den Befestigungsarmen der Radträgerrohlinge die Aufnahmeöffnungen positioniert und eingebracht. Dies kann beispielsweise durch Bohren erfolgen. Im Anschluss daran werden die so hergestellten Radträger an der Verbundlenkerachse starr, insbesondere schubstarr montiert. Bereitgestellt wird somit eine Achsanordnung mit fahrzeugindividueller Spurweite, wobei die Achsanordnung aus Gleichteilen hergestellt ist. Es kann somit erfindungsgemäß die Herstellung fahrzeugindividueller Bauteile vermieden werden. Insbesondere die Rohlinge bzw. die Radträgerrohlinge oder aber auch die Verbundlenkerachse als Rohling können als Gleichteile hergestellt sein. Die Stückkosten zur Herstellung dieser Gleichteile können somit minimiert werden.

Insbesondere ist die Koppelung von Radträger an die Verbundlenkerachse starr. Dies bedeutet, dass gerade kein Gummimetalllager eingebracht ist. Insbesondere erfolgt die Koppelung über einen Schraubbolzen. Somit ist die eingestellte Spurweite fest. Die Spurweite ist somit starr eingestellt.

Insofern die Befestigungsarme des Radträgers auch zumindest teilweise in Fahrzeuglängsrichtung orientiert sind, ist es weiterhin möglich den Spurwinkel und/oder den Radstand mit dem zuvor beschrieben Verfahren festzulegen. Insbesondere bezieht sich der Radstand dann auf einen Verbau der erfindungsgemäßen Achsanordnung an einem Kraftfahrzeug. Auch hier erfolgt die Koppelung wiederum nach Positionierung und Herstellung der Aufnahmeöffnung starr mittels eines Schraubbolzens. Somit kann mittels Gleichteilerohlingen eine Möglichkeit aufgezeigt werden eine fahrzeugindividuelle Spurweite und/oder Spurwinkel und/oder Radstand festzulegen.

Die Achsanordnung für ein Kraftfahrzeug weist eine Verbundlenkerachse mit einem zwei äußere Schwingen verbindenden Torsionsrohr und an den Enden der Schwingen mittels Schraubverbindungen gekoppelten Radträgern auf. Jeder Radträger weist dabei selbst ein integriertes Radlager zur Aufnahme eines Fahrzeugrades auf. Erfindungsgemäß ist die Achsanordnung dadurch gekennzeichnet, dass je ein Radträger über mindestens drei Schraubverbindungen mit dem Ende der Schwinge gekoppelt ist und jeder Radträger in Richtung zu dem Ende der Schwinge abstehend orientierte Befestigungsarme aufweist, wobei durch Platzierung in eine Aufnahmeöffnung in Kraftfahrzeugquerrichtung an jedem Befestigungsarm die Spurweite der Achsanordnung festgelegt ist.

Erfindungsgemäß ergibt sich somit der Vorteil, dass die Achsanordnung im Wesentlichen aus drei Bauelementen ausgebildet ist. Zum einen ist dies die eigentliche Verbundlenkerachse, welche beispielsweise als Schweißkonstruktion aus Torsionsrohren und Schwinge hergestellt ist und die jeweiligen Radträger mit integrierten Radlagern. Die Radträger selbst sind dabei bevorzugt durch einen Hauptkörper ausgebildet, welcher maßgeblich in Kraftfahrzeugvertikalrichtung und Kraftfahrzeuglängsrichtung ausgebildet ist, mit sich von dem Hauptkörper in Kraftfahrzeugquerrichtung orientiert zu dem Ende der Schwinge zeigenden Befestigungsarmen. In diese Radträger ist dann bevorzugt das Radlager eingepresst oder alternativ bilden auch die Radträger selbst die Außenschale des Radlagers aus.

Die Radträger sind dabei bevorzugt als Gußbauteile hergestellt, wobei insbesondere die Lageraufnahme und/oder die Befestigungsarme durch ein mechanisches Verfahren nachbearbeitet sind. Insbesondere wird hier ein spanabhebendes Verfahren angewendet. Dieses bietet gleichsam wieder den Vorteil, dass durch das spanabhebende Verfahren die Sollgeometrie der kinematischen Anbindungspunkte justiert wird.

Erfindungsgemäß ist es auch vorstellbar, dass sich die Befestigungsarme weiterhin in Kraftfahrzeuglängsrichtung erstrecken. Es ist somit möglich, durch Platzierung der Aufnahmeöffnung sowohl in Kraftfahrzeuglängsrichtung, als auch in Kraftfahrzeugquerrichtung, nicht nur die Spurweite, sondern auch den Spurwinkel festzulegen. Durch die Wahl der Lage in Kraftfahrzeuglängsrichtung kann weiterhin der Radstand beeinflusst werden und somit um wenige Millimeter bis hin zu einigen Zentimetern, vergrößert oder verringert werden, indem der Radträger in Kraftfahrzeuglängsrichtung verschoben ist. Ebenfalls ist es möglich, durch gezielte Platzierung der Aufnahmeöffnungen bezogen auf die Kraftfahrzeugvertikalrichtung an oberen und unteren Befestigungsarmen den Sturzwinkel des aufzunehmenden Rades einzustellen.

Nunmehr ist vorgesehen, insbesondere in einer Fahrzeugplattform zur Erreichung verschiedener Spurweiten eine jeweilige Aufnahmeöffnung in dem jeweiligen Befestigungsarm des Radträgers einzubringen, nachfolgend auch Positionieren oder Platzieren genannt. Durch Positionierung der Aufnahmeöffnung, bezogen insbesondere auf die Kraftfahrzeugquerrichtung ist es möglich, die Spurweite der Achsanordnung festzulegen. Wird beispielsweise eine jeweilige Aufnahmeöffnung näher am radträgerseitigen Ende des Befestigungsarmes eingebracht, und die so hergestellten beiden Radträger an der Verbundlenkerachse montiert, ergibt sich eine geringere Spurweite. Werden die Aufnahmeöffnungen am zur Schwinge zeigenden Ende des Befestigungsarmes eingebracht und die beiden Radträger an der Verbundlenkerachse montiert, so ergibt sich eine demgegenüber größere Spurweite. Wird somit beispielsweise auf einer Plattform ein Mittelklassewagen, ein Minivan sowie eine Limousine aufgebaut, können mit der erfindungsgemäßen Achsanordnung alle Modelle dieser Plattform unter Verwendung von Gleichteilen mit individueller Spurweite ausgestattet werden. Auch sind die Radträger in der Fertigung zunächst identisch, bis zu dem Punkt der Einbringung der Aufnahmeöffnung in dem Befestigungsarm. Hier unterscheidet sich dann beispielsweise der Minivan von der Limousine dadurch, dass der Minivan eine gegenüber der Limousine größere Spurweite aufweist.

Der Vorteil der erfindungsgemäßen Achsanordnung ist, dass die Achsanordnung ausschließlich aus Gleichteilen aufgebaut ist, mit dem einzigen Unterschied, dass die Positionierung der Aufnahmeöffnung in der Fertigung für verschiedene Fahrzeugmodelle der gleichen Plattform individuell festgelegt ist. Hierdurch werden die benötigten Bauteile der Achse für die Kraftfahrzeugachse selbst reduziert, sowie die Herstellungskosten der Achse für verschiedene Modelle der gleichen Plattform deutlich gesenkt, bei größerem konstruktiven Freiheitsgrad gerade in der Auslegung des Fahrverhaltens und/oder der Kraftfahrzeugdynamik aufgrund verschiedener Spurweiten.

Die Herstellung des Kraftfahrzeuges mit der Verbundlenkerachse betrifft auch ein Verfahren zur Herstellung der Verbundlenkerachse des Kraftfahrzeuges, wonach zunächst die Verbundlenkerachsen sowie die Radträger bereitgestellt werden. Insbesondere werden diese als Gleichteile bereitgestellt. Durch Positionierung und Bohrung der Aufnahmeöffnungen an dem jeweiligen Arm bzw. Radträgerarm kann dann wiederum fahrzeugindividuell die Spurweite und/oder der Radstand und/oder der Spurwinkel und/oder der Sturzwinkel festgelegt werden. Die Koppelung von Radträger und Verbundlenkerachse erfolgt dann starr über Schraubbolzen.

Das Einbringen bzw. Positionieren bzw. Platzieren der jeweiligen Aufnahmeöffnung in dem Befestigungsarm erfolgt derart, dass der Befestigungsarm zunächst massiv mit einer Erstreckung insbesondere in Kraftfahrzeugquerrichtung und zusätzlich gegebenenfalls in Kraftfahrzeuglängsrichtung ausgebildet ist. Es wird sodann je nach geforderter Spurweite aber auch Spurwinkel, Sturzwinkel und/oder Radstand, der Ort des Einbringens der Aufnahmeöffnung gewählt und dann beispielsweise durch ein spanabhebendes Verfahren, insbesondere Bohren, die Aufnahmeöffnung an dem vorbestimmten Ort auf den Befestigungsarm eingebracht. Die Koppelung erfolgt dann starr bzw. schubstarr. Dies bedeutet, es ist kein Gummimetalllager eingegliedert.

Ein weiterer Vorteil ergibt sich aufgrund der individuell festlegbaren Möglichkeit von Spur und/oder Sturz des Kraftfahrzeugrades an sich. Dies kann dabei im Rahmen der Erfindung durch zwei kombinierte oder jeweils alleinige Maßnahmen erfolgen. Zum einen kann die mechanische Nachbearbeitung der Befestigungsarme derart erfolgen, dass hierdurch bedingt beispielsweise der Sturz eingestellt wird. Die Anbindungspunkte am Ende der Schwinge der Verbundlenkerachse sind bevorzugt gleichbleibend, wobei dann die Orientierung der Befestigungsarme, insbesondere aufgrund des spanabhebenden Verfahrens die Möglichkeit gibt, den Kraftfahrzeugsturz und im gewissen Maße auch die Spur eines jeden Rades voreinzustellen.

Die Spur des Kraftfahrzeugrades, mithin die Drehung um eine parallel versetzte Kraftfahrzeugvertikalrichtung kann wiederum durch Platzierung der Aufnahmeöffnung voreingestellt werden. Wird beispielsweise die Aufnahmeöffnung bezogen auf die Fahrtrichtung an einen hinteren Befestigungsarm in Richtung zur Schwinge verlagert, wird dadurch das Rad in Vorspur gedreht. Eine aufwendige Nachjustierung und/oder Nachbearbeitung von komplexen Komponenten, kann somit im Rahmen der Erfindung entfallen, da lediglich die Befestigungsarme und/oder die Platzierung der Aufnahmeöffnung zur Voreinstellung von Spur- und/oder Sturz, insbesondere der Spurweite gewählt werden.

Weiterhin besonders bevorzugt ist die Aufnahmeöffnung als Durchgangsbohrung oder als Gewindebohrung ausgeführt. Im Falle einer Durchgangsbohrung würde der Befestigungsarm von einem Schraubbolzen durchgriffen werden, wobei dann der Schraubbolzen in einem Gewinde an einem Befestigungspunkt am Ende der Schwinge eingreift. Im Rahmen der Erfindung kann jedoch auch der Befestigungsarm des Radträgers zunächst durchgriffen werden und der Schraubbolzen dann in eine Gewindebohrung an den Befestigungsarmen des Radträgers formschlüssig eingreifen.

Weiterhin besonders bevorzugt weist der Befestigungsarm eine in Richtung zu dem Ende der Schwinge orientierte Länge auf, welche dem 1,5 bis 10-fachen des Durchmessers der Aufnahmeöffnung entspricht.

Besonders bevorzugt weist der Befestigungsarm eine in Richtung zum Ende der Schwinge orientierte Länge auf, welche dem 1,5 bis 5-fachen des Durchmessers der Aufnahmeöffnung entspricht. Bei einem Durchmesser der Aufnahmeöffnung von Beispielsweise 10 mm ist es somit durch einen bevorzugt beispielsweise 30 mm langen Befestigungsarm möglich die Aufnahmeöffnung um 20 mm auf dem Befestigungsarm zu verschieben. Diese Variation durch Festlegen der Position der Aufnahmeöffnung ermöglicht es, die Spurweite von einer minimalen Spurweite auf eine maximale Spurweite um bis zu 40 mm an der Achse zu variieren.

Weiterhin besonders bevorzugt weist der Radträger eine Aufnahme für einen Bremssattel auf, hierdurch ist es dann wiederum möglich, für sämtliche Fahrzeuge der Plattform ein einheitliches Bremssystem zu verwenden, so dass wiederum die Zahl der Gleichteile steigt und dadurch die Produktionskosten des Kraftfahrzeuges verringert werden.

Besonders bevorzugt ist der Radträger selbst einstückig und werkstoffeinheitlich ausgebildet, insbesondere aus einem Stahlwerkstoff, bevorzugt als Gießbauteil, welches dann mechanisch nachbearbeitet wird.

Zu einer Fahrzeugplattform im Sinne der Erfindung, an welcher die Achsanordnung bevorzugt eingebaut ist, gehören weiterhin gleiche Aggregate, wie Motor, Getriebe sowie deren Lagerung, eine gleiche Lenkung, Schaltung, Fußhebelwerk, Hinterachse, welche erfindungsgemäß modular in der Spurweite einstellbar ist, trotz Verwendung von Gleichteilen. Weiterhin umfasst die Fahrzeugplattform bevorzugt einen Kraftstoffbehälter, eine Abgasanlage, Räderreifen, gegebenenfalls einen gesamten Vorderwagen, Stirnwand, Mittelboden, Hinterwagen, Sitzgestelle sowie gegebenenfalls weiterhin eine Verkabelung der einzelnen Fahrzeugelektronickomponenten.

Weitere Vorteile, Merkmale, Eigenschaften und Aspekte der vorliegenden Erfindung sind Gegenstand der nachfolgenden Beschreibung. Bevorzugte Ausgestaltungsvarianten werden in den schematischen Figuren näher erläutert. Es zeigen:
- Figur 1: eine erfindungsgemäße Achsanordnung mit eingestellter Spurweite,
- Figur 2: den erfindungsgemäßen Radträger in perspektivischer Ansicht,
- Figur 3: den erfindungsgemäßen Radträger montiert am Ende der Schwinge in perspektivischer Ansicht von hinten;
- Figur 4: den erfindungsgemäßen Radträger montiert am Ende der Schwinge in perspektivischer Ansicht von vorne;
- Figur 5: eine schematische Draufsicht auf ein Rad zur Einstellung des Spurwinkels;
- Figur 6: eine Hinteransicht eines Rades mit eingestelltem Sturzwinkel und
- Figur 7: zwei Kraftfahrzeugachsen, deren Radstand durch Wahl der Platzierung der Aufnahmeöffnung eingestellt ist.

In den Figuren werden für gleiche oder ähnliche Bauteile dieselben Bezugszeichen verwendet, auch wenn eine wiederholte Beschreibung aus Vereinfachungsgründen entfällt.

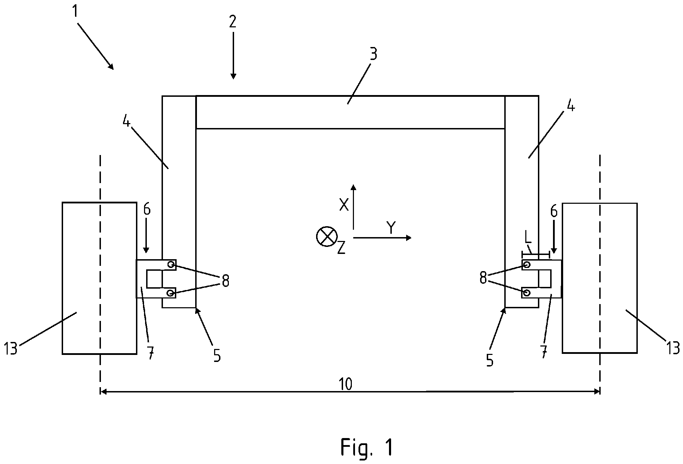

Figur 1 zeigt die erfindungsgemäße Achsanordnung 1 mit einer Verbundlenkerachse 2, wobei die Verbundlenkerachse 2 ein Torsionsrohr 3 mit an dem Torsionsrohr 3 angeordneten Schwingen 4 aufweist. Am Ende 5 der Schwingen 4 bzw. im Bereich des Endes 5 der Schwingen 4 ist jeweils ein erfindungsgemäßer Radträger 6 angeordnet, wobei sich von einem Grundkörper 7 des Radträgers 6 einstückig und werkstoffeinheitlich Befestigungsarme 8 in Richtung zum Ende 5 der Schwinge 4, insbesondere in Kraftfahrzeugquerrichtung Y mit einer Länge L erstrecken.

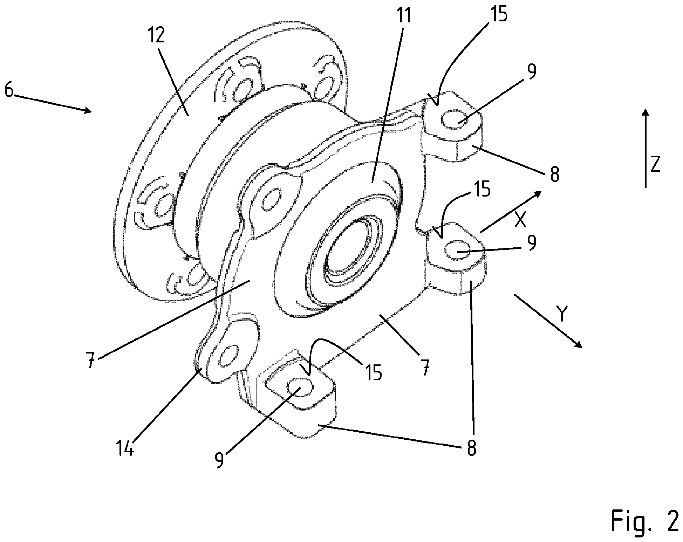

Die Befestigungsarme 8 weisen dabei eine in Figur 2 dargestellte Aufnahmeöffnung auf, wobei durch Platzierung der Bohrung für die Aufnahmeöffnung in Kraftfahrzeugquerrichtung Y die Spurweite 10 der erfindungsgemäßen Achsanordnung 1 festlegbar ist. Wird mithin die Aufnahmeöffnung 9 in dem Befestigungsarm 8 weiter in Richtung des Endes 5 der Schwinge 4 platziert, so rückt dadurch der Radträger 6 weiter bezogen auf die Kraftfahrzeugquerrichtung Y nach außen. Es ergibt sich dadurch eine größere Spurweite 10.

Ebenfalls gut zu erkennen in Figur 2 ist, dass das Radlager 11 direkt in den Radträger 6 eingesetzt ist und über eine nicht näher dargestellte Welle gekoppelt einen Radflansch 12 aufweist. An dem Radflansch 12 wird dann das Rad 13 selbst drehbar befestigt. Ferner gut ersichtlich in Figur 2 ist, dass ein Bremssattelhalter 14 einstückig und werkstoffeinheitlich an dem Radträger 6, insbesondere dem Grundkörper 7 des Radträgers 6 ausgebildet ist. Ebenfalls gut ersichtlich ist, dass eine Oberfläche 15 eines jeden Befestigungsarms 8 durch ein spanabhebendes Verfahren abgeplant ist. Durch das spanabhebende Verfahren ist es möglich, sowohl die Positionierung des Radträgers 6 an dem Ende 5 der Schwinge 4 in Kraftfahrzeugvertikalrichtung Z vorzunehmen, als auch Produktionstoleranzen bei der Herstellung des Radträgers 6 als Gußkörper auszugleichen. Ferner ist es möglich Spur- und Sturz des jeweiligen Kraftfahrzeugrades voreinzustellen.

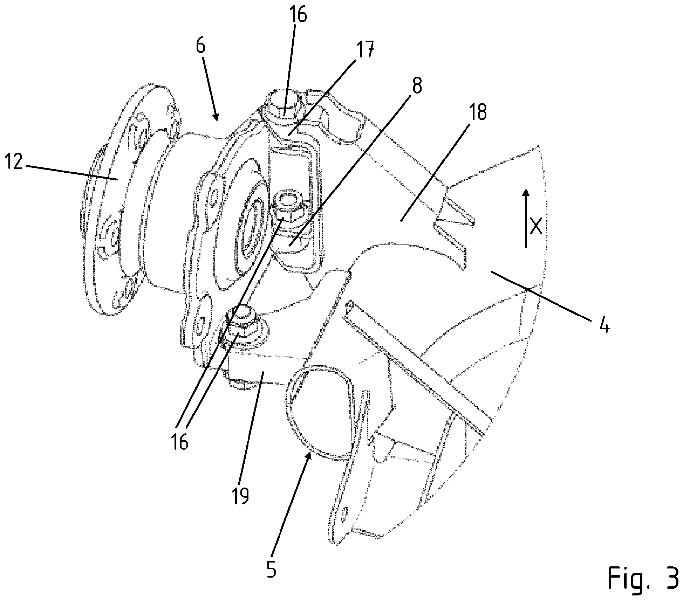

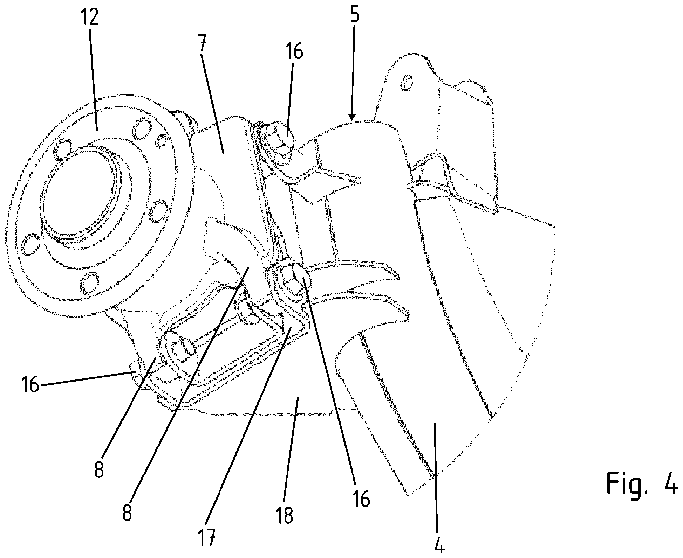

Figur 3 und 4 zeigen jeweils den Radträger 6 in Einbaulage am Ende 5 der Schwinge 4 einer Verbundlenkerachse 2. Gut ersichtlich ist, dass mittels dreier Schraubverbindungen 16 der Radträger 6 an den Aufnahmepunkten der Schwinge 4 festgelegt ist. Hier dargestellt sind die Aufnahmeöffnungen 9 der Befestigungsarme 8 von der Schraubverbindung vollständig durchgriffen. Es ist auch vorstellbar, dass die Aufnahmeöffnung 9 selbst eine Gewindebohrung ist.

Die Aufnahme am Ende 5 der Schwinge 4 selbst ist als Umform- und Schweißbauteil ausgebildet. An der Schwinge 4 selbst ist ein gabelförmiges Montageblech 17 befestigt, welches über eine Schulterstütze 18 mit dem Ende 5 der Schwinge 4 gekoppelt ist, wobei bevorzugt alle Bauteile mit dem Ende 5 der Schwinge 4 verschweißt sind. Ein bezogen auf die Kraftfahrzeuglängsrichtung X hinterer Befestigungspunkt ist ebenfalls als Umformbauteil 19 mit einer sich erstreckenden L-förmigen Konfiguration mit dem Ende 5 der Schwinge 4 gekoppelt.

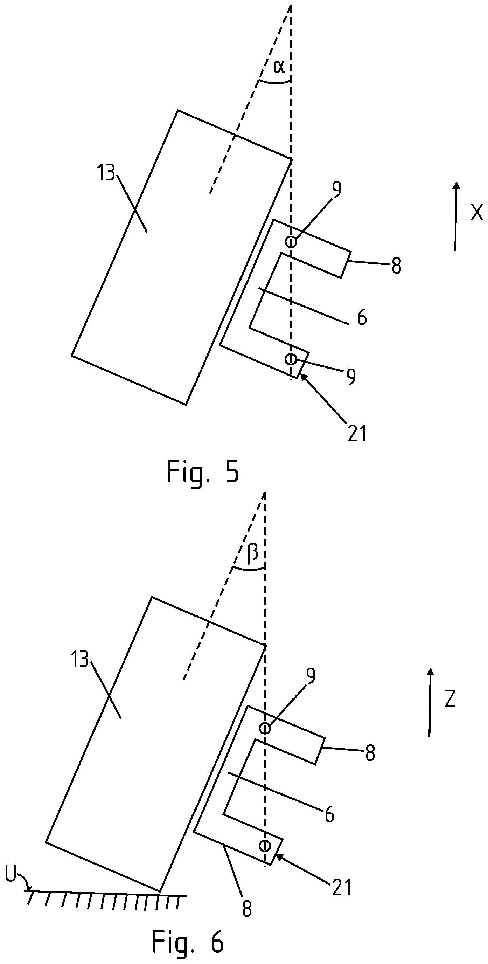

Figur 5 zeigt weiterhin einen Radträger 6, bei dem bezogen auf die Kraftfahrzeuglängsrichtung X eine in Fahrtrichtung vordere Aufnahmeöffnung 9 weiter in Richtung Rad 13 platziert ist und eine hintere Aufnahmeöffnung 9 weiter in Richtung des freien Endes 21 des Befestigungsarms 8 platziert ist. Hierdurch kann der Spurwinkel α voreingestellt werden.

Figur 6 zeigt eine Hinteransicht auf ein Rad 13 auf einen Untergrund U mit erfindungsgemäßem Radträger 6, wobei hier an dem Radträger 6 bezogen auf die Kraftfahrzeugvertikalrichtung Z oberen Befestigungsarm 8 eine Aufnahmeöffnung 9 weiter in Richtung Rad 13 platziert ist und an dem unteren Befestigungsarm 8 weiter in Richtung zum freien Ende 21 des Befestigungsarms 8 platziert ist. Hierdurch ist der Sturzwinkel β einstellbar.

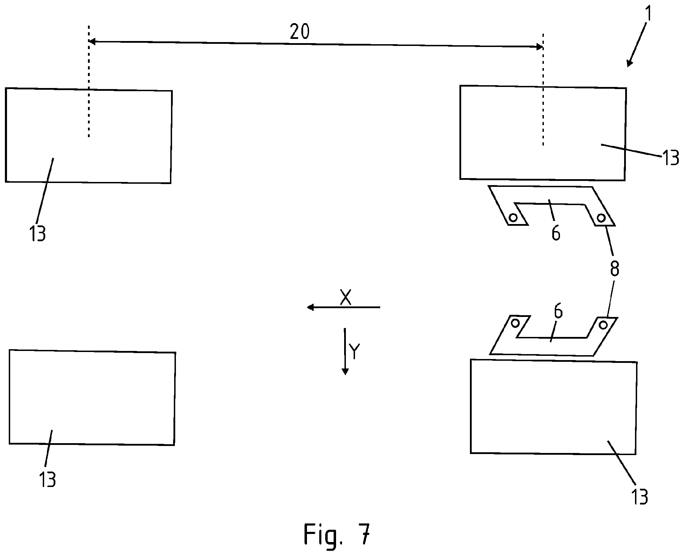

Figur 7 zeigt eine Draufsicht auf ein schematisiertes Kraftfahrzeug mit vier Rädern, wobei an der Hinterachse eine erfindungsgemäße Achsanordnung 1 angeordnet ist. Diese Achsanordnung 1 weist Radträger 6 auf, deren Befestigungsarme 8 sich nicht nur in Kraftfahrzeugquerrichtung Y, sondern auch zusätzlich in Kraftfahrzeuglängsrichtung X erstrecken. Durch gezielte Platzierung der Aufnahmeöffnung 9 in Kraftfahrzeuglängsrichtung X ist es möglich, den Radstand 20 entsprechend voreinzustellen.

### Bezugszeichen:

- 1 -: Achsanordnung
- 2 -: Verbundlenkerachse
- 3 -: Torsionsrohr
- 4 -: Schwinge
- 5 -: Ende zu 4
- 6 -: Radträger
- 7 -: Grundkörper zu 6
- 8 -: Befestigungsarm zu 6
- 9 -: Aufnahmeöffnung
- 10 -: Spurweite
- 11 -: Radlager
- 12 -: Radflansch
- 13 -: Rad
- 14 -: Bremssattelhalter
- 15 -: Oberfläche zu 8
- 16 -: Schraubverbindung
- 17 -: gabelförmiges Montageblech
- 18 -: Schulterstütze
- 19 -: Umformbauteil
- 20 -: Radstand
- 21 -: freies Ende zu 8

- L -: Länge
- U -: Untergrund
- X -: Kraftfahrzeuglängsrichtung
- Y -: Kraftfahrzeugquerrichtung
- Z -: Kraftfahrzeugvertikalrichtung
- α -: Spurwinkel
- β -: Sturzwinkel

## Patentansprüche

1. Verfahren zur Herstellung einer Achsanordnung (1) mit unterschiedlichen Spurweiten für ein Kraftfahrzeug, wobei eine Verbundlenkerachse (2) mit einem zwei äußere Schwingen (4) verbindenden Torsionsrohr (3) bereitgestellt wird, mit folgenden Verfahrensschritten:
• Bereitstellen von standardisierten Radträgern (6), die in Kraftfahrzeugquerrichtung (Y) zu dem Ende (5) der Schwingen (4) gerichtete Befestigungsarme (8) und ein integriertes Radlager (11) zur Anbindung eines Fahrzeugrades aufweisen,
• wobei in Abhängigkeit der geforderten Spurweite (10) eine Aufnahmeöffnung (9) in jedem Befestigungsarm (8) platziert und eingebracht wird
• und durch starre Koppelung der Radträger (6) mit den Enden (5) der Schwingen (4) über mindestens drei Schraubverbindungen (16) pro Radträger (6) die Spurweite (10) festgelegt wird.

2. Verfahren nach Anspruch 1, **dadurch gekennzeichnet, dass** sich die Befestigungsarme (8) zusätzlich in Kraftfahrzeuglängsrichtung (X) erstrecken.

3. Verfahren nach einem der Ansprüche 1 oder 2, **dadurch gekennzeichnet, dass** durch Platzierung der Aufnahmeöffnung (9) in Kraftfahrzeuglängsrichtung (X) der Radstand (20) des Kraftfahrzeuges voreingestellt ist.

4. Verfahren nach einem der Ansprüche 1 bis 3, **dadurch gekennzeichnet, dass** die Befestigungsarme (8) des Radträgers (6) mechanisch nachbearbeitet sind, wobei durch die mechanische Nachbearbeitung der Sturzwinkel (β) und/oder der Spurwinkel (α) voreinstellbar sind, so dass durch die Platzierung der Aufnahmeöffnungen (9) an den Befestigungsarmen (8) eines Radträgers (6) der Sturzwinkel (β) und/oder der Spurwinkel (α) voreinstellbar sind.

5. Verfahren nach einem der Ansprüche 1 bis 4, **dadurch gekennzeichnet, dass** die Aufnahmeöffnung (9) eine Durchgangsbohrung oder eine Gewindebohrung ist.

6. Verfahren nach einem der Ansprüche 1 bis 5, **dadurch gekennzeichnet, dass** der Befestigungsarm (8) eine in Richtung zu dem Ende (5) der Schwinge (4) orientierte Länge (L) aufweist, welche dem 1,5 bis 5-fachen des Durchmessers der Aufnahmeöffnung (9) entspricht.

7. Verfahren nach einem der Ansprüche 1 bis 6, **dadurch gekennzeichnet, dass** der Radträger (6) eine Aufnahme für einen Bremssattel aufweist.

8. Verfahren nach einem der Ansprüche 1 bis 7, **dadurch gekennzeichnet, dass** der Radträger (6) einstückig und werkstoffeinheitlich ausgebildet ist.

9. Verfahren nach Anspruch 8, **dadurch gekennzeichnet, dass** der Radträger (6) aus einem Stahlwerkstoff oder als Gießbauteil ausgebildet ist.

10. Verfahren nach einem der Ansprüche 1 bis 9, **dadurch gekennzeichnet, dass** das Radlager (11) in den Radträger (6) eingepresst ist oder dass der Radträger (6) die Außenschale der Wälzkörper des Radlagers (11) ist.

11. Fahrzeugplattform zur Herstellung verschiedener Fahrzeugmodelle mit einheitlicher technischer Basis, **dadurch gekennzeichnet, dass** eine Achsanordnung (1) hergestellt mit einem Verfahren nach mindestens Anspruch 1 verbaut ist.

## Claims

1. Method for producing an axle arrangement (1) having different gauges for a motor vehicle, wherein a twist beam axle (2) having a torsion tube (3) connecting two outer swing arms (4) is provided, having the following method steps:
- providing standardised wheel mounts (6) which have fastening arms (8) directed in the vehicle transverse direction (Y) towards the end (5) of the swing arms (4) and an integrated wheel bearing (11) for connecting a vehicle wheel,
- wherein, depending on the required gauge (10), a receiving opening (9) is placed and introduced in each fastening arm (8)
- and the gauge (10) is set by rigid coupling of the wheel mounts (6) to the ends (5) of the swing arms (4) via at least three screw connections (16) per wheel mount (6).

2. Method according to claim 1, **characterised in that** the fastening arms (8) additionally extend in the vehicle longitudinal direction (X).

3. Method according to either of claims 1 or 2, **characterised in that** the wheelbase (20) of the motor vehicle is pre-set by placing the receiving opening (9) in the vehicle longitudinal direction (X).

4. Method according to any one of claims 1 to 3, **characterised in that** the fastening arms (8) of the wheel mount (6) are finished mechanically, wherein the camber angle (β) and/or the toe angle (α) are able to be pre-set due to the mechanical finishing, such that the camber angle (β) and/or the toe angle (α) are able to be pre-set by the placing of the receiving openings (9) on the fastening arms (8) of a wheel mount (6)

5. Method according to any one of claims 1 to 4, **characterised in that** the receiving opening (9) is a through bore or a threaded bore.

6. Method according to any one of claims 1 to 5, **characterised in that** the fastening arm (8) has a length (L) oriented in the direction towards the end (5) of the swing arm (4), which corresponds to 1.5 to 5 times the diameter of the receiving opening (9).

7. Method according to any one of claims 1 to 6, **characterised in that** the wheel mount (6) has a receiver for a brake calliper.

8. Method according to any one of claims 1 to 7, **characterised in that** the wheel mount (6) is formed in one piece and in one material.

9. Method according to claim 8, **characterised in that** the wheel mount (6) is formed from a steel material or a cast component.

10. Method according to any one of claims 1 to 9, **characterised in that** the wheel bearing (11) is pressed into the wheel mount (6) or that the wheel mount (6) is the outer shell of the rolling elements of the wheel bearing (11).

11. Vehicle platform for producing different vehicle models having a uniform technical basis, **characterised in that** an axle arrangement (1) produced using a method according to at least claim 1 is installed.

## Revendications

1. Procédé de fabrication d'un essieu (1) avec différentes largeurs de voie pour un véhicule automobile, dans lequel un essieu de torsion (2) est mis à disposition avec un tube de torsion (3) reliant deux bras oscillants extérieurs (4), avec les étapes de procédé suivantes :
- mise à disposition de supports de roues standardisés (6), qui présentent des bras de fixation (8) dirigés dans la direction transversale du véhicule automobile (Y) vers l'extrémité (5) des bras oscillants (4) et un roulement de roue intégré (11) pour le raccordement d'une roue de véhicule,
- dans lequel en fonction de la largeur de voie exigée (10), une ouverture de logement (9) est placée et introduite dans chaque bras de fixation (8)
- et la largeur de voie (10) est déterminée par un couplage rigide des supports de roues (6) avec les extrémités (5) des bras oscillants (4) par le biais d'au moins trois raccords vissés (16) par support de roue (6).

2. Procédé selon la revendication 1, **caractérisé en ce que** les bras de fixation (8) s'étendent en outre dans la direction longitudinale du véhicule automobile (X).

3. Procédé selon l'une quelconque des revendications 1 ou 2, **caractérisé en ce que** l'empattement (20) du véhicule automobile est préréglé par placement de l'ouverture de logement (9) dans la direction longitudinale du véhicule automobile (X).

4. Procédé selon l'une quelconque des revendications 1 à 3, **caractérisé en ce que** les bras de fixation (8) du support de roue (6) sont rectifiés mécaniquement, dans lequel l'angle de carrossage (β) et/ou l'angle de pincement (α) peuvent être préréglés par la rectification mécanique, de sorte que l'angle de carrossage (β) et/ou l'angle de pincement (α) peuvent être préréglés par le placement des ouvertures de logement (9) au niveau des bras de fixation (8) d'un support de roue (6).

5. Procédé selon l'une quelconque des revendications 1 à 4, **caractérisé en ce que** l'ouverture de logement (9) est un perçage traversant ou un perçage fileté.

6. Procédé selon l'une quelconque des revendications 1 à 5, **caractérisé en ce que** le bras de fixation (8) présente une longueur (L) orientée en direction de l'extrémité (5) du bras oscillant (4), laquelle correspond à 1,5 à 5 fois le diamètre de l'ouverture de logement (9).

7. Procédé selon l'une quelconque des revendications 1 à 6, **caractérisé en ce que** le support de roue (6) présente un logement pour un étrier de frein.

8. Procédé selon l'une quelconque des revendications 1 à 7, **caractérisé en ce que** le support de roue (6) est réalisé d'un seul tenant et en un même matériau.

9. Procédé selon la revendication 8, **caractérisé en ce que** le support de roue (6) est réalisé en un matériau en acier ou en tant que composant coulé.

10. Procédé selon l'une quelconque des revendications 1 à 9, **caractérisé en ce que** le roulement de roue (11) est enfoncé dans le support de roue (6) ou que le support de roue (6) est la coque extérieure des éléments roulants du roulement de roue (11).

11. Plateforme de véhicules pour la fabrication de différents modèles de véhicules avec une base technique uniforme, **caractérisé en ce qu'**un essieu (1) fabriqué avec un procédé selon au moins la revendication 1 est monté.
